# EUROPEAN PATENT APPLICATION

(11) **EP 3 213 965 A1**
(43) Date of publication of application: **06.09.2017**
(21) Application number: 16305245.9
(22) Date of filing: 03.03.2016
(51) Int. Cl.: B60R 19/34

(54) **BUMPER ASSEMBLY WITH SHOCK-ABSORBER AND ASSOCIATED MOTOR VEHICLE**

(71) Applicant: Flex-N-Gate France, 75008 Paris (FR)
(72) Inventor: OUESLATI, Amir, ROCHESTER, MI 48307 (US); GILLARD, Laurent, SOUTHFIELD, MI, 48076 (US)
(74) Representative: Lavoix

(57) **Abstract**

The invention relates to a bumper assembly (10) for a motor vehicle, comprising a transversal bumper beam (12), at least one longitudinal member (14) and at least one shock-absorber (16). The shock-absorber (16) connects the bumper beam (12) to the longitudinal member (14). The shock-absorber (16) has a first face connected to the bumper beam (12) and a second face connected to the longitudinal member (14).

The first face has a greater surface than the surface of the second face.

## Description

The invention relates to a bumper assembly for a motor vehicle, comprising a transversal bumper beam, at least one longitudinal member and at least one shock-absorber, the shock-absorber connecting the bumper beam to the longitudinal member, the shock-absorber having a first face connected to the bumper beam and a second face connected to the longitudinal member.

The invention also relates to a motor vehicle comprising such a bumper assembly.

Motor vehicles comprising such a bumper assembly are well-known.

A current issue is to improve the protection offered by the vehicle in case of an impact with a "small overlap". A small overlap is defined by an impact wherein only a small portion of the vehicle's structure hits an object such as a pole or a tree, for example, when only one side of the front of the vehicle is hit.

This type of impact loads a strong force on the small portion of the vehicle. The small portion is not necessarily equipped to protect the passengers in such a case or is not arranged to properly distribute the energy of the impact in the bumper beam arranged to absorb this energy.

A first approach to improve the protection in case of a small overlap impact is to add a rigid structure around the vehicle that will resist during the impact.

However, in this case, the passenger may suffer a high deceleration due to the impact which is also dangerous. Passenger(s) might suffer from a trauma of the cervical vertebrae and some passenger's organs might fail, such as in a splenic injury, even if the passenger is fastened with a seatbelt.

A second approach is to widen the longitudinal member and mount additional shock-absorbers.

However, this solution requires a modification of the body of current vehicles. Therefore, it cannot be easily integrated in currently existing vehicle designs.

One of the aims of the invention is to provide a bumper assembly that will protect the passengers in case of an impact with a small overlap and which can be easily integrated into existing vehicle models.

According to the invention, this object is achieved by a bumper assembly of the previous type, wherein the first face has a greater surface than the surface of the second face.

The shock-absorber is arranged to absorb the energy of the impact, even in case of a small overlap, thanks to the shape of the shock-absorber which allows it to cover a broad surface on the side of the vehicle, without having to modify the body of the vehicle.

According to particular embodiments, the inventive bumper assembly includes one, several or all of the following features, in all technically possible combinations:
- the shock-absorber has a trapezoidal section along a cut plane comprising the longitudinal and the transversal directions between the first face and the second face ;
- the shock-absorber comprises an exterior part defining a cavity and a foam, the foam being located in the cavity ;
- the foam is made of polyurethane ;
- the exterior part is made of plastic, preferably of polypropylene or polyamide ;
- the exterior part is without glass-fiber reinforcements ;
- the exterior part is with glass-fiber reinforcements ;
- the foam fills the cavity of the exterior part;
- the exterior part has reinforcing ribs where the shock-absorber is connected to the bumper beam and the longitudinal member;
- the parts of the first face connected to the bumper beam and of the second face connected to the longitudinal member are reinforced with a metal sheet;
- the metal sheet has a thickness greater than 0,7 mm ;
- the bumper assembly comprises two shock-absorbers, each shock-absorber being arranged in the vicinity of one of the ends of the bumper beam; and
- the bumper assembly is a front bumper assembly.

The invention also relates to a motor vehicle comprising a bumper assembly of the aforementioned type.

Other aspects and advantages of the invention will appear upon reading the following description, given by way of example and made in reference to the appended drawings, wherein:
- figure 1 is a perspective view of a bumper assembly according to an embodiment of the invention,
- figure 2 is a perspective view of a shock-absorber of the bumper assembly of figure 1,
- figure 3 is an exploded view of the shock-absorber of figure 2, and
- figure 4 is a schematic view from above of the shock-absorber of figure 2.

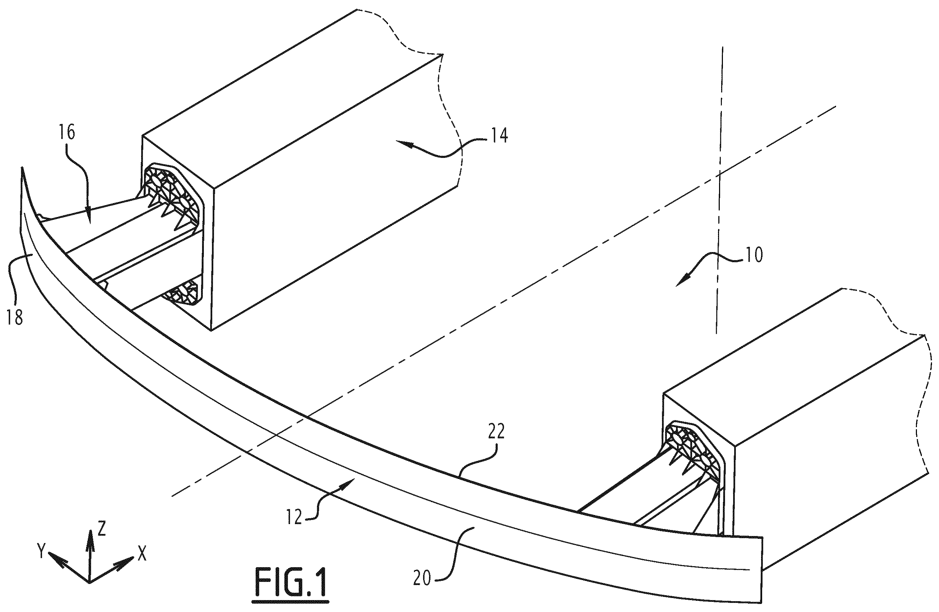

An embodiment of a bumper assembly 10 according to the invention is depicted in figure 1.

The bumper assembly 10 is integrated in a motor vehicle (not represented), for example, as a front bumper assembly at the front of the vehicle. It should be noted that the bumper assembly could also be integrated at the rear of the vehicle.

The bumper assembly 10 comprises a bumper beam 12, at least one longitudinal member 14 and at least one shock-absorber 16.

The bumper beam 12 extends generally along a transversal axis Y defining a transversal direction.

The bumper beam 12 extends between two transversal ends 18.

The bumper beam 12 presents, for example, a slight curve to follow the exterior lines of the vehicle.

The transversal axis Y and the longitudinal member 14 are generally perpendicular.

A vertical direction Z is defined perpendicularly to the transversal direction and the longitudinal direction, defined by the longitudinal member.

In a mounted vehicle, the longitudinal direction X corresponds to the rear-front direction of the vehicle and the transversal direction corresponds to the width direction.

A plane comprising the transversal and the longitudinal directions is called a horizontal plane.

The bumper beam 12 presents an exterior surface 20, arranged to face the exterior of the motor vehicle, and an interior surface 22 opposite the exterior surface 20.

The longitudinal member 14 has at least one longitudinal end, to which the shock-absorber 16 is connected.

In the depicted embodiment, the bumper assembly 10 comprises two longitudinal members 14 and two shock-absorbers 16.

The bumper assembly 10 is substantially symmetrical along a median plane P of the longitudinal members 14. Each longitudinal member 14 is for example formed by a frame rail of the vehicle.

Each shock-absorber 16 connects the bumper beam 12 to a different longitudinal member 14.

The shock-absorber 16 is attached to the bumper beam 12 and the longitudinal member 14 with fastening means (not represented), such as screws for example.

Each shock-absorber 16 is arranged in the vicinity of one of the transversal ends 18 of the bumper beam 12.

The minimal distance between each shock-absorber 16 and one of the ends 18 of the bumper beam 12 is, for example, smaller than 10% of the length of the bumper beam measured along the transversal direction.

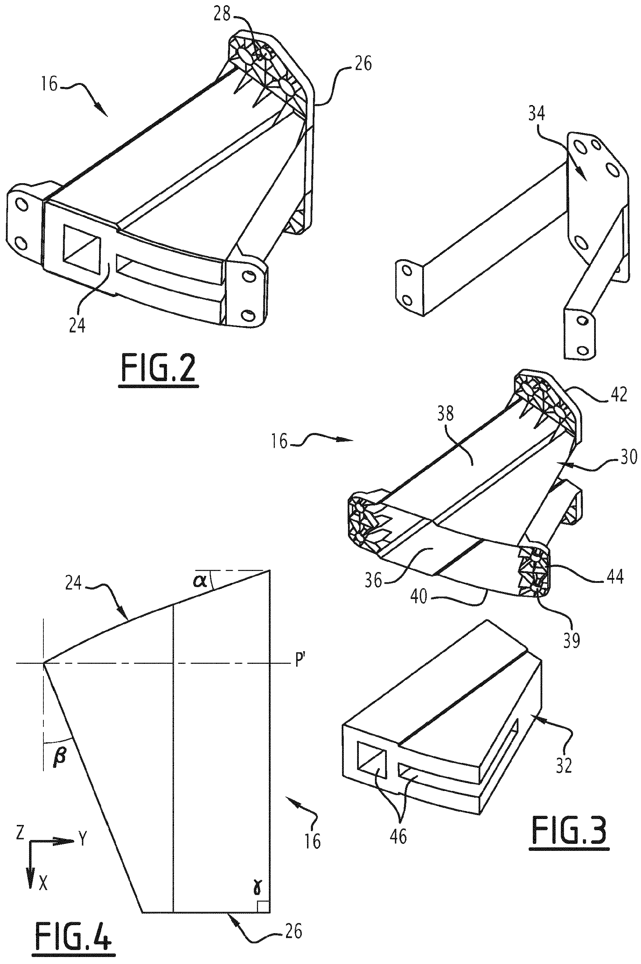

An embodiment of one of the shock-absorbers 16 of figure 1 is depicted in figures 2 and 3.

The other shock-absorber 16 depicted in figure 1 is mirror symmetrical to the one depicted in figures 2 and 3.

The shock-absorber is arranged to crash during an impact and thus absorb the energy of the impact.

The shock-absorber 16 has, for example, the general form of a polyhedron, and more precisely of a hexahedron.

Each shock-absorber 16 has a first face 24 connected to the bumper beam 12 and a second face 26 connected to the longitudinal member 14.

The shock-absorber 16 further has an upper face, a lower face, a first side face and a second side faces, each joining the first face 24 to the second face 26.

More precisely, the first face 24 is connected to the interior surface 22 of the bumper beam 12.

The first face 24, respectively the second face 26, is connected to the bumper beam 12, respectively the longitudinal member 14, in particular with fixation parts 28 that extend outside the general form of the shock-absorber. The fixation parts 28 are, for example, designed to receive the fastening means between the shock-absorber 16 and the bumper beam 12 or the longitudinal member 14.

The first face 24 extends substantially in a vertical plane.

The first face 24 can be slightly curved in order to be complementary to the portion of the interior surface 22 of the bumper beam 12 to which said first face 24 is attached.

The second face 26 extends, for example, perpendicularly to the longitudinal direction.

The first face 24 and the second face 26 form an angle α comprised between 10° and 25°.

The first face 24 has a greater surface than that of the second face 26.

Here, the surface does not include the fixation parts 28.

The surface includes the first face 24, respectively the second face 26, of the polyhedron, being the general form of the shock-absorber.

The upper and lower faces extend substantially in horizontal planes and connect the first face 24 and the second face 26.

The first and the second side faces extend substantially in vertical planes and connect the upper and the lower faces and the first and second faces 24, 26.

The first side face faces the other shock-absorber. The first side face is, for example, longitudinal.

The second side face forms a non-zero angle β with the longitudinal direction. The angle is, for example, comprised between 10° and 45°.

The shock-absorber 16 has, for example, a trapezoidal section along a cut horizontal plane between the first face 24 and the second face 26.

In the depicted embodiment, the bumper beam 12 being slightly curved, the shock-absorber 16 has a trapezoidal section along a cut horizontal plane between the second face 26 and a vertical transversal plane P' near the first face 24.

The trapezoidal section has one right angle γ.

Each shock-absorber 16 comprises an exterior part 30 and a foam 32.

Each shock-absorber 16 further comprises a metal sheet 34.

The exterior part 30 defines a cavity 36.

The exterior part 30 comprises two horizontal faces 38.

The exterior part 30 further comprises connection portions 39 that help connect the shock-absorber 16 to the bumper beam 12 and the longitudinal member 14.

The two horizontal faces 38 are the upper and lower faces of the shock-absorber 16.

The two horizontal faces 38 have a front end 40 and a rear end 42.

The front end 40 is applied against the bumper beam 12 and the rear end 42 is applied against the longitudinal member 14.

The two horizontal faces are connected with connection portions 39 at the front end 40.

The connection portions extend outside the polyhedron and are not counted in the surface.

The connection portions 39 are, for example, also fixation parts 28.

The exterior part 30 further comprises reinforcing ribs 44 where the shock-absorber 16 is connected to the bumper beam 12 and the longitudinal member 14, and more specifically at the connection portions 39.

The exterior part 30 is made of plastic, preferably of polypropylene or polyamide, with or without glass-fiber reinforcements.

The foam 32 improves the energy-absorption capacity of the shock-absorber 16.

The foam 32 is located in the cavity 36. The foam 32 is made of polyurethane. In the depicted embodiment, the foam 32 partially fills the cavity 36. The foam 32 has a general shape complementary with the cavity 36.

The foam 32 comprises at least one hollowness 46. The foam 32 comprises, for example, two hollowness 46.

One of the hollowness is, for example, a longitudinal though-aperture in the shape of a cuboid. The size of this hollowness modifies, in particular, the energy that the shock-absorber can absorb along the longitudinal direction during an impact.

Another of the hollowness is, for example, an aperture emerging at the first face 24 and the second side face. The size of this hollowness modifies, in particular, the energy that the shock-absorber can absorb outside the longitudinal direction during an impact.

Alternatively, the foam 32 fills the cavity 36 of the exterior part 30 and is deprived of any hollowness.

The foam 32 is retained by the exterior part 30 between the first face 24 and the second face 26.

The foam 32 is here not directly connected to the bumper beam 12 or the longitudinal member 14.

For example, the surface of the first face 24, respectively of the second face 26, only includes the surface of the smallest convex polygon which comprises the foam 32.

The metal sheet 34 reinforces the parts of the first face 24 connected to the bumper beam 12 and of the second face 26 connected to the longitudinal member 16, in particular the connection portions 39.

The metal sheet 34 has a thickness greater than 0,7 mm.

The metal sheet 34 is made of steel or aluminum alloy.

The shape of the shock-absorber allows it to cover a broad surface of the bumper beam.

The first face is located in the vicinity of each transversal end of the bumper beam such that the first face comprises an outer portion that is not longitudinally facing the longitudinal member but nearer the transversal end of the bumper beam and the side of the vehicle.

During an impact with a small overlap, the impact occurs against that outer portion of the first face and the energy of the collision can be absorbed and redistributed to the longitudinal member thanks to the second side face which extends diagonally compared to the longitudinal direction.

The bumper assembly is effective even when one side of the front of the motor vehicle hits an obstacle with a small overlap.

During an impact between the motor vehicle and the obstacle, the shock-absorbers absorb some part of the energy created by the impact so that the damage done to the main frame of the motor vehicle is minimized and that the deceleration due to the impact is less abrupt. The bumper assembly thus protects the passenger(s).

## Claims

1. Bumper assembly (10) for a motor vehicle, comprising a transversal bumper beam (12), at least one longitudinal member (14) and at least one shock-absorber (16), the shock-absorber (16) connecting the bumper beam (12) to the longitudinal member (14), the shock-absorber (16) having a first face (24) connected to the bumper beam (12) and a second face (26) connected to the longitudinal member (14),
**characterized in that** the first face (24) has a greater surface than the surface of the second face (26).

2. Bumper assembly according to claim 1, **characterized in that** the shock-absorber (16) has a trapezoidal section along a cut plane comprising the longitudinal and the transversal directions between the first face (24) and the second face (26).

3. Bumper assembly according to claim 1 or 2, **characterized in that** the shock-absorber (16) comprises an exterior part (30) defining a cavity (36) and a foam (32), the foam (32) being located in the cavity (36).

4. Bumper assembly according to claim 3, **characterized in that** the foam (32) is made of polyurethane.

5. Bumper assembly according to claim 3 or 4, **characterized in that** the exterior part (30) is made of plastic, preferably of polypropylene or polyamide.

6. Bumper assembly according to claim 5, **characterized in that** the exterior part (30) is without glass-fiber reinforcements.

7. Bumper assembly according to claim 5, **characterized in that** the exterior part (30) is with glass-fiber reinforcements.

8. Bumper assembly according to any of claims 3 to 7, **characterized in that** the foam (32) fills the cavity (36) of the exterior part (30).

9. Bumper assembly according to any of claims 3 to 8, **characterized in that** the exterior part (30) has reinforcing ribs (44) where the shock-absorber (16) is connected to the bumper beam (12) and the longitudinal member (14).

10. Bumper assembly according to any of claims 1 to 9, **characterized in that** the parts of the first face (24) connected to the bumper beam (12) and of the second face (26) connected to the longitudinal member (14) are reinforced with a metal sheet (34).

11. Bumper assembly according to claim 10, **characterized in that** the metal sheet (34) has a thickness greater than 0,7 mm.

12. Bumper assembly according to any of claims 1 to 11, **characterized in that** the bumper assembly (10) comprises two shock-absorbers (16), each shock-absorber (16) being arranged in the vicinity of one of the ends (18) of the bumper beam (12).

13. Bumper assembly according to any of claims 1 to 12, **characterized in that** the bumper assembly (10) is a front bumper assembly.

14. Motor vehicle comprising a bumper assembly (10) according to any of claims 1 to 13.
